# EUROPEAN PATENT APPLICATION

(11) **EP 4 645 436 A1**
(43) Date of publication of application: **05.11.2025**
(21) Application number: 23910915.0
(22) Date of filing: 29.12.2023
(51) Int. Cl.: H01M 4/133

(54) **NEGATIVE ELECTRODE SHEET AND PREPARATION METHOD THEREFOR, LITHIUM ION BATTERY, AND ELECTRIC VEHICLE**

(30) Priority: 30.12.2022 CN 202211738679
(71) Applicant: BYD Company Limited, Shenzhen, Guangdong 518118 (CN)
(72) Inventor: WU, Chuchu, Shenzhen, Guangdong 518118 (CN); PEI, Dazhao, Shenzhen, Guangdong 518118 (CN); HU, Jing, Shenzhen, Guangdong 518118 (CN); WANG, Liangjun, Shenzhen, Guangdong 518118 (CN); HE, Kefeng, Shenzhen, Guangdong 518118 (CN)
(74) Representative: Mathys & Squire
(86) International application number: PCT/CN2023/143121
(87) International publication number: WO 2024/141001

(57) **Abstract**

A negative electrode sheet. The negative electrode sheet comprises a current collector (1), and a silicon-containing layer (2), an intermediate layer (3) and a carbon layer (4) which are stacked in sequence on at least one side of the current collector (1), wherein the intermediate layer comprises a first conductive agent and a first binder.

## Description

### CROSS-REFERENCE TO RELATED APPLICATIONS

The present disclosure claims priority to and benefits of Chinese Patent Application No. 202211738679.5, filed on December 30, 2022 and entitled with "NEGATIVE ELECTRODE SHEET AND PREPARATION METHOD THEREFOR, LITHIUM-ION BATTERY, AND ELECTRIC VEHICLE". The entire content of the above-referenced application is incorporated herein by reference.

### FIELD

The present disclosure relates to the field of lithium-ion battery technologies, and specifically, to a negative electrode sheet and preparation method therefor, a lithium-ion battery, and an electric vehicle.

### BACKGROUND

Increasing market demands of the new energy automobile industry create a higher requirement for energy density and fast charging performance of power batteries. In mainstream lithium-ion battery systems, the energy density of existing graphitic negative electrode systems (a carbon material) has gradually approached a theoretical limit (372 mAh/g). As an emerging negative electrode material, silicon materials have advantages such as a high theoretical capacity (4,200 mAh/g), a low platform for lithium intercalation, and abundant resources, and have become the most promising negative electrode material. However, a large-scale volume expansion (approximately 300%) occurs during lithium intercalation of a silicon material, causing a decrease in capacity of the lithium intercalation, and low electrical conduction of silicon also affects the utilization of electrochemical performance of silicon. Mixing a graphite material and a silicon material is an effective strategy for improving performance of lithium-ion batteries. However, because there is a difference between lithium intercalation performance of the silicon and lithium intercalation performance of the graphite, compatibility of a mixed system is poor, and as a result, the cycle life of such an ion battery is reduced. Therefore, a negative electrode is urgently needed to resolve the problem of low cycle life of silicon-containing negative electrode batteries.

### SUMMARY

An objective of the present disclosure is to overcome a problem of low cycle performance of silicon-containing negative electrode lithium-ion batteries in the related art, and provide a negative electrode sheet and preparation method therefor, a lithium-ion battery, and an electric vehicle.

To achieve the foregoing objective, a first aspect of the present disclosure provides a negative electrode sheet. The negative electrode sheet includes a current collector, and a silicon-containing layer, an intermediate layer, and a carbon layer that are stacked in sequence on at least one side of the current collector. The intermediate layer includes a first conductive agent and a first binder.

A second aspect of the present disclosure provides a preparation method for a negative electrode sheet. The preparation method for the negative electrode sheet includes the following steps: sequentially forming a silicon-containing layer, an intermediate layer, and a carbon layer on at least one side of a current collector. The intermediate layer includes a first conductive agent and a first binder.

A third aspect of the present disclosure provides a lithium-ion battery. The lithium-ion battery includes the negative electrode sheet provided in the present disclosure or the negative electrode sheet obtained by using the preparation method for the negative electrode sheet provided in the present disclosure.

A fourth aspect of the present disclosure provides an electric vehicle. The electric vehicle includes the lithium-ion battery provided in the present disclosure.

According to the negative electrode sheet provided in the present disclosure, the silicon-containing layer, the intermediate layer, and the carbon layer are stacked in sequence on the at least one side of the current collector. The intermediate layer including a conductive agent and a binder is introduced between the silicon-containing layer and the carbon layer. Therefore, interface compatibility between the carbon layer and the silicon-containing layer is effectively improved, and adhesion and interfacial stress between the two layers are enhanced, to avoid separation of the two layers due to expansion of the silicon-containing layer. In addition, the intermediate layer including the conductive agent and the binder provides a stable electronic and ion transmission channel between the carbon layer and the silicon-containing layer, alleviating a lithium precipitation phenomenon caused by uneven distribution of negative electrode electrochemical reactions during charging and discharging of the battery, and prolonging the cycle life of the lithium-ion batteries.

### BRIEF DESCRIPTION OF THE DRAWINGS

Accompanying drawings are used to provide further understanding of the present disclosure and constitute a part of the specification, and are used to explain the present disclosure together with the following specific implementations, but do not constitute a limitation to the present disclosure. In the accompanying drawings:
FIG. 1 is a schematic diagram of a negative electrode sheet according to an implementation of the present disclosure;
FIG. 2 is a diagram of a normal-temperature fast-charging cycle performance of a lithium-ion battery prepared in Embodiment 1 to Embodiment 3 and Comparative example 2; and
FIG. 3 is a photograph of a negative electrode sheet of a lithium-ion battery prepared in Embodiment 2 and Comparative example 1 to Comparative example 2 when the battery is disassembled after 100 cycles of fast charging of the battery and a state of charge of the battery is 100%.

In the drawings:
1: current collector; 2: silicon-containing layer; 3: intermediate layer; 4: carbon layer.

### DETAILED DESCRIPTION

The endpoints of ranges and any values disclosed in this specification are not limited to precise ranges or values, and these ranges or values should be understood as including values close to these ranges or values. For value ranges, endpoint values of ranges, the endpoint values of the ranges and individual point values, and the individual point values may be combined with each other to obtain one or more new value ranges, and these value ranges should be considered as specifically disclosed in this specification.

A first aspect of the present disclosure provides a negative electrode sheet. The negative electrode sheet includes a current collector, and a silicon-containing layer, an intermediate layer, and a carbon layer that are stacked in sequence on at least one side of the current collector. The intermediate layer includes a first conductive agent and a first binder.

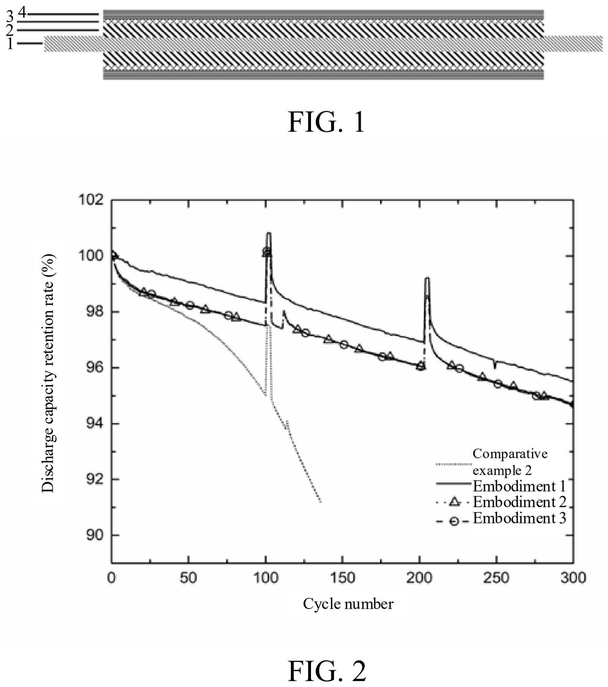

According to some implementations of the present disclosure, as shown in FIG. 1, silicon-containing layers 2, intermediate layers 3, and carbon layers 4 are stacked in sequence respectively on an upper surface and a lower surface of the current collector 1, to form the negative electrode sheet.

According to some implementations of the present disclosure, the current collector 1 includes copper foil and/or foam copper. In some other implementations, the current collector 1 includes the copper foil.

According to some implementations of the present disclosure, the silicon-containing layer 2 includes a silicon material, a second carbon material, a second conductive agent, and a second binder.

According to some implementations of the present disclosure, the silicon material includes at least one of silicon, silicon oxide, and a silicon-carbon material.

Further, the silicon material includes silicon oxide and/or the silicon-carbon material. In the present disclosure, the silicon oxide (SiOₓ, where 0<x<2, for example, which may be SiO) is an inorganic compound. In a first lithium intercalation process, SiOₓ first reacts with lithium, to generate elemental silicon, Li₂O, and lithium silicate (Li₄SiO₄, Li₂SiO₃, Li₂SiO₅, and the like). The elemental silicon may further react with Li, to generate a reversible capacity. The generated Li₂O and the lithium silicate do not participate in a reaction any more in a subsequent electrochemical cycle process, but may have the effect of buffering volume expansion of the elemental silicon and protecting the active material. The elemental silicon, as an active site, performs a lithium intercalation reaction with a lithium ion, to provide a high specific capacity. In addition, the lithium silicate may buffer volume expansion after lithium intercalation of the elemental silicon and reduce particle breakage and chalking of the elemental silicon during a charging/discharging cycle, so that the cycle life of a battery is effectively prolonged. The silicon-carbon material is a composite material of silicon and carbon. The silicon performs a lithium intercalation reaction with a lithium ion, to provide a high specific capacity. The carbon material has high electrical conduction, and may improve ion transfer on a surface of an electrode material, to improve rate performance of the lithium-ion battery. In addition, a carbon base may further buffer particle breakage and chalking of the silicon, so that the cycle life of a battery can be effectively prolonged.

According to some implementations of the present disclosure, the second carbon material includes at least one of natural graphite, artificial graphite, hard carbon, soft carbon, and a mesocarbon microbead.

Further, the second carbon material includes the natural graphite and/or the artificial graphite. The silicon-containing layer 2 including the natural graphite and/or the artificial graphite can effectively relieve volume expansion caused by chalking of the silicon material, so that initial coulombic efficiency and the cycle life of a battery can be further improved.

According to some implementations of the present disclosure, the second conductive agent includes at least one of a single-wall carbon nanotube, conductive graphite, conductive carbon black, graphene, or an arrayed carbon fiber.

Further, the second conductive agent includes a mixture of the single-wall carbon nanotube and the conductive carbon black.

Further, in the mixture of single-wall carbon nanotube and conductive carbon black, a weight ratio of single-wall carbon nanotube to conductive carbon black is 1:(2 - 10), such as 1:2, 1:5, 1:7, 1:9, or 1:10. The second conductive agent of the silicon-containing layer 2 obtained based on the weight ratio can construct an effective point-line combined conductive network around the silicon material. The conductive network is wrapped around the silicon material, to improve conductivity of the silicon-containing layer 2, and further improve a structural stability of the silicon-containing layer 2.

According to some implementations of the present disclosure, the second binder includes a styrene-butadiene rubber and/or polyacrylic acid.

Further, the second binder includes the polyacrylic acid. The polyacrylic acid is used as the second binder for the silicon-containing layer 2, so that a strong bonding force can be provided to limit expansion and chalking of the silicon material, to reduce detachment of the silicon material from the current collector 1 due to the expansion and the chalking, and promote transmission of an lithium ion and an electron on the negative electrode sheet by bonding the silicon material with the second carbon material, the second conductive agent, and the like.

Further, a weight-average molecular weight of the polyacrylic acid ranges from 300,000 g/mol to 600,000 g/mol, for example, 300,000 g/mol, 350,000 g/mol, 400,000 g/mol, 450,000 g/mol, 500,000 g/mol, 550,000 g/mol, or 600,000 g/mol.

According to some implementations of the present disclosure, based on a total weight of the silicon-containing layer 2, in the silicon-containing layer 2, a total content of the silicon material and the second carbon material ranges from 70 wt.% to 97 wt.%, a content of the second conductive agent ranges from 0.1 wt.% to 15 wt.%, and a content of the second binder ranges from 3 wt.% to 15 wt.%. For example, the total content of the silicon material and the second carbon material in the silicon-containing layer 2 is 70 wt.%, 75 wt.%, 80 wt.%, 85 wt.%, 90 wt.%, 95 wt.%, 97 wt.%, or the like; the content of the second conductive agent is 0.1 wt.%, 0.5 w.t%, 1 wt.%, 1.5 wt.%, 2 wt.%, 2.5 wt.%, 5 wt.%, 7 wt.%, 10 wt.%, 12 wt.%, 15 wt.%, or the like; and the content of the second binder is 3 wt.%, 3.5 wt.%, 5 wt.%, 7 wt.%, 10 wt.%, 12 wt.%, 15 wt.%, or the like. When the contents of the foregoing components are within the ranges, the silicon-containing layer 2 has a high mass specific capacity while maintaining an appropriate bonding force and electrical conduction, facilitating improvement of energy density of a battery.

According to some implementations of the present disclosure, the silicon-containing layer 2 further includes a second dispersant. The second dispersant may improve dispersity of the silicon material, the second carbon material, and the second conductive agent in the silicon-containing layer 2, to avoid agglomeration of the components, so as to ensure full utilization of performance of the components. When the second binder includes the styrene-butadiene rubber, the silicon-containing layer 2 includes the second dispersant.

Further, the second dispersant includes at least one of carboxymethyl cellulose, sodium carboxymethylcellulose, and lithium carboxymethylcellulose.

According to some implementations of the present disclosure, when the silicon-containing layer 2 includes the second dispersant, based on a total weight of the silicon-containing layer 2, a content of the second dispersant in the silicon-containing layer 2 is not greater than 15 wt.%.

According to some implementations of the present disclosure, the carbon layer 4 includes a third carbon material, a third conductive agent, and a third binder.

Further, the third carbon material includes at least one of natural graphite, artificial graphite, hard carbon, soft carbon, and a mesocarbon microbead.

Further, the third carbon material includes the natural graphite and/or the artificial graphite. The carbon layer 4 obtained by using the natural graphite and/or the artificial graphite can provide a high specific mass capacity and a high initial coulombic efficiency, and has better dynamic performance.

Further, the third conductive agent includes at least one of a single-wall carbon nanotube, conductive graphite, conductive carbon black, graphene, or an arrayed carbon fiber.

Further, the third conductive agent is conductive carbon black. The conductive carbon black is used as the third conductive agent of the carbon layer 4, so that the conductive network in the carbon layer 4 can be further optimized while a low cost is maintained.

Further, the third binder includes a styrene-butadiene rubber and/or polyacrylic acid.

Further, the third binder is the styrene-butadiene rubber. The styrene-butadiene rubber is used as the third binder of the carbon layer 4, so that an appropriate bonding force can be provided while a processing difficulty of a coating process for the carbon layer 4 is reduced.

Further, a weight-average molecular weight of the styrene-butadiene rubber ranges from 200,000 g/mol to 1,000,000 g/mol, for example, 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, or 1,000,000 g/mol.

According to some implementations of the present disclosure, based on a total weight of the carbon layer 4, in the carbon layer, a content of the third carbon material 4 ranges from 70 wt.% to 97 wt.%, a content of the third conductive agent ranges from 0.1 wt.% to 15 wt.%, and a content of the third binder ranges from 1 wt.% to 15 wt.%. For example, in the carbon layer 4, the content of the third carbon material is 70 wt.%, 75 wt.%, 80 wt.%, 85 wt.%, 90 wt.%, 95 wt.%, 97 wt.%, or the like; the content of the third conductive agent is 0.1 wt.%, 0.5 wt.%, 1 wt.%, 1.5 wt.%, 2 wt.%, 2.5 wt.%, 5 wt.%, 7 wt.%, 10 wt.%, 12 wt.%, 15 wt.%, or the like; and the content of the third binder is 1 wt.%, 2 wt.%, 3 wt.%, 3.5 wt.%, 5 wt.%, 7 wt.%, 10 wt.%, 12 wt.%, 15 wt.%, or the like. When the contents of the foregoing components are within the ranges, the carbon layer 4 can has a high mass specific capacity while maintaining an appropriate bonding force and electrical conduction, facilitating improvement of energy density of a battery.

According to some implementations of the present disclosure, the carbon layer 4 further includes a third dispersant. The third dispersant may improve dispersity of the third carbon material, the third conductive agent in the carbon layer, to avoid agglomeration of the components, so as to ensure fully exerting of performance of the components.

Further, the third dispersant includes at least one of carboxymethyl cellulose, sodium carboxymethylcellulose, and lithium carboxymethylcellulose. In some other implementations, the third dispersant includes lithium carboxymethylcellulose.

According to some implementations of the present disclosure, based on the total weight of the carbon layer 4, in the carbon layer 4, a content of the third dispersant ranges from 0.1 wt.% to 15 w.t%, for example, 0.1 wt.%, 0.5 wt.%, 1 wt.%, 1.5 wt.%, 2 wt.%, 2.5 wt.%, 5 wt.%, 7 wt.%, 10 wt.%, 12 wt.%, or 15 wt.%.

According to some implementations of the present disclosure, the first conductive agent includes at least one of a single-wall carbon nanotube, conductive graphite, conductive carbon black, graphene, or an arrayed carbon fiber.

Further, the first conductive agent includes the single-wall carbon nanotube and/or the conductive carbon black. The single-wall carbon nanotube and/or the conductive carbon black are/is used as the first conductive agent of the intermediate layer 3, and can be closely combined with a binder of the intermediate layer 3 to form a cross-linked conductive network, promoting carrier transfer between the silicon-containing layer 2 and the carbon layer 4.

Further, the first conductive agent includes a mixture of the single-wall carbon nanotube and the conductive carbon black.

Further, in the mixture including the single-wall carbon nanotube and the conductive carbon black, a weight ratio of single-wall carbon nanotube to conductive carbon black is 1:(1 - 10), for example, 1:1, 1:2, 1:5, 1:7, 1:9, or 1:10. The mixture of the single-wall carbon nanotube and the conductive carbon black at the ratio can form a point-line combined continuous conductive network in the intermediate layer 3, to promote rapid transfer of an electron and an lithium ion in the intermediate layer 3, so as to improve rate performance of a battery; and can alleviate a lithium precipitation phenomenon caused by uneven distribution of electrochemical active sites of an electrode during charging and discharging of the battery, to improve cycle performance of the lithium-ion battery, so as to increase service life of the battery. In addition, structural stability and flexibility of the intermediate layer 3 can also be enhanced to adapt to stress generated by expansion of a structure of the silicon-containing layer 2.

According to some implementations of the present disclosure, the first binder includes polyacrylic acid and/or a styrene-butadiene rubber.

Further, the first binder includes a mixture of the polyacrylic acid and the styrene-butadiene rubber. A weight ratio of the polyacrylic acid to the styrene-butadiene rubber is (0.1 - 40):1, for example, 0.1:1, 0.5:1, 1:1, 5:1, 10:1, 15:1, 20:1, 25:1, 30:1, 35:1, or 40:1. In some other implementations, a weight ratio of polyacrylic acid to styrene-butadiene rubber is (2 - 10):1. The first binder obtained based on the weight ratio can significantly enhance adhesion between the silicon-containing layer 2 and the carbon layer 4.

Further, a weight-average molecular weight of the polyacrylic acid in the first binder ranges from 300,000 g/mol to 600,000 g/mol, for example, 300,000 g/mol, 350,000 g/mol, 400,000 g/mol, 450,000 g/mol, 500,000 g/mol, 550,000 g/mol, or 600,000 g/mol.

Further, a weight-average molecular weight of the styrene-butadiene rubber in the first binder ranges from 200,000 g/mol to 1,000,000 g/mol, for example, 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, or 1,000,000 g/mol.

According to some implementations of the present disclosure, based on a total weight of the intermediate layer 3, in the intermediate layer 3, a content of the first conductive agent ranges from 10 wt.% to 70 wt.%, and a content of the first binder ranges from 30 wt.% to 90 wt.%. For example, the content of the first conductive agent is 10 wt.%, 15 wt.%, 20 wt.%, 25 wt.%, 30 wt.%, 35 wt.%, 40 wt.%, 45 wt.%, 50 wt.%, 55 wt.%, 60 wt.%, 65 wt.%, 70 wt.%, or the like; and the content of the first binder is 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.%, 90 wt.%, or the like. When the contents of the foregoing components are within the ranges, an electrical conduction and an adhesion effects of the intermediate layer 3 can be effectively exerted, and interface compatibility between the silicon-containing layer 2 and the carbon layer 4 can be improved.

According to some implementations of the present disclosure, the intermediate layer 3 further includes a first carbon material. In the present disclosure, the first carbon material is introduced to the intermediate layer 3, so that a proportion of active materials in the intermediate layer 3 is increased, and a proportion of active materials in the negative electrode sheet is further increased. In addition, a good lithium ion transmission channel is formed between the silicon-containing layer 2 and the carbon layer 4.

Further, the first carbon material includes at least one of natural graphite, artificial graphite, hard carbon, soft carbon, and a mesocarbon microbead. In some other implementations of the present disclosure, the first carbon material includes the natural graphite and/or the artificial graphite.

According to some implementations of the present disclosure, based on the total weight of the intermediate layer 3, in the intermediate layer 3, a content of the first carbon material ranges from 5 wt.% to 20 wt.%, for example, 5 wt.%, 7 wt.%, 10 wt.%, 12 wt.%, 15 wt.%, 17 wt.%, or 20 wt.%. When the content of the first carbon material is within the range, a lithium ion transmission path can be optimized and energy density of a battery can be increased while ensuring that the electrical conduction and the adhesion effects of the intermediate layer 3 are as desired.

In the present disclosure, appropriate types and proportions of the conductive agent and binder in the intermediate layer 3 are selected, the first carbon material is introduced into the intermediate layer 3, and compositions and proportions of the silicon-containing layer 2 and the carbon layer 4 are properly selected, so that direct current internal resistance of the lithium-ion battery is reduced, to further improve rate performance of the lithium-ion battery.

According to some implementations of the present disclosure, the intermediate layer 3 further includes a first dispersant.

Further, the first dispersant includes at least one of carboxymethyl cellulose, sodium carboxymethylcellulose, and lithium carboxymethylcellulose.

According to some implementations of the present disclosure, based on the total weight of the intermediate layer 3, a content of the first dispersant ranges from 0.1 wt.% to 15 wt.%, for example, 0.1 wt.%, 0.5 wt.%, 1 wt.%, 2 wt.%, 5 wt.%, 7 wt.%, 10 wt.%, 12 wt.%, or 15 wt.%.

According to some implementations of the present disclosure, based on a single-side thickness, a total thickness of the silicon-containing layer 2, the intermediate layer 3, and the carbon layer 4 ranges from 40 µm to 100 µm, for example, 40 µm, 45 µm, 50 µm, 55 µm, 60 µm, 65 µm, 70 µm, 75 µm, 80 µm, 85 µm, 90 µm, 95 µm, or 100 µm.

Further, a thickness ratio of the silicon-containing layer 2 to the carbon layer 4 is (1 - 5):1, for example, 1:1, 2:1, 3:1, 4:1, or 5:1.

Further, based on the single-side thickness, a thickness of the intermediate layer 3 is 1 µm to 20 µm, for example, 1 µm, 5 µm, 7 µm, 10 µm, 12 µm, 15 µm, 17 µm, or 20 µm. When the thickness of the intermediate layer 3 is within the range, a proportion of a negative active material is not excessively reduced while an effect of the intermediate layer 3 is effectively utitlized.

In some other implementation of the present disclosure, a thickness of the intermediate layer 3 ranges from 1 µm to 5 µm.

A second aspect of the present disclosure provides a preparation method for a negative electrode sheet. The preparation method for the negative electrode sheet includes the following steps: sequentially forming a silicon-containing layer, an intermediate layer, and a carbon layer on at least one side of a current collector. The intermediate layer includes a first conductive agent and a first binder.

According to some implementations of the present disclosure, the preparation method includes the following steps:
(1) mixing a silicon material, a second carbon material, a second conductive agent, and a second binder in proportion, to form a slurry A;
(2) mixing a first conductive agent and a first binder in proportion, to form a slurry B;
(3) mixing a third carbon material, a third conductive agent, and a third binder in proportion, to form a slurry C; and
(4) sequentially coating the slurry A, the slurry B, and the slurry C to the current collector, to obtain the negative electrode sheet.

According to some implementations of the present disclosure, in step (1) to step (3), dispersants may be added, respectively.

In the preparation method for the negative electrode sheet in the second aspect of the present disclosure, compositions and amounts of the silicon-containing layer, the intermediate layer, the carbon layer, and the like are all completely the same as those of the silicon-containing layer, the intermediate layer, the carbon layer, and the like in the negative electrode sheet in the first aspect of the present disclosure, which is not described in detail in the second aspect of the present disclosure again to avoid repetition, and should not be understood by a person skilled in the art as a limitation to the present disclosure.

A third aspect of the present disclosure provides a lithium-ion battery. The lithium-ion battery includes the negative electrode sheet provided in the present disclosure or the negative electrode sheet obtained by using the preparation method for the negative electrode sheet provided in the present disclosure.

A fourth aspect of the present disclosure provides an electric vehicle. The electric vehicle includes the lithium-ion battery provided in the present disclosure.

The following describes the present disclosure in detail by using embodiments. In the following embodiments,
a thickness of the negative electrode sheet is measured by using a myriameter.

A weight-average molecular weight of the polyacrylic acid is 400,000 g/mol.

A weight-average molecular weight of the styrene-butadiene rubber is 400,000 g/mol.

### Embodiment 1

Based on a weight ratio of 60:17:3:10, a silicon material (silicon oxide, SiOₓ, where x=1), graphite (artificial graphite), a conductive agent (where a weight ratio of a single-wall carbon nanotube to conductive carbon black is 1:2), and a binder (polyacrylic acid) are dispersed in deionized water, to prepare a slurry A and sieve the slurry A for standby. Based on a weight ratio of 10:75:15, a conductive agent (single-wall carbon nanotube), a binder (where a weight ratio of polyacrylic acid to a styrene-butadiene rubber is 60:15), and a dispersant (lithium carboxymethylcellulose) are dispersed in deionized water, to prepare a slurry B and sieve the slurry B for standby. Based on a weight ratio of 96:1:1.5:1.5, a carbon material (artificial graphite), a conductive agent (conductive carbon black), a binder (a styrene-butadiene rubber), and a dispersant (lithium carboxymethylcellulose) are dispersed in deionized water, to prepare a slurry C and sieve the slurry C for standby. The slurry A, the slurry B, and the slurry C are coated sequentially and evenly on a copper foil current collector to obtain a silicon-containing bottom layer, an intermediate layer, and a graphite top layer, and then are coated on two sides. Then, drying, winding, rolling, and die-cutting are performed to obtain a negative electrode sheet. A total thickness of a single side excluding the current collector (based on a single-sided thickness, a total thickness of the silicon-containing layer, the intermediate layer, and the carbon layer) is 60 µm. A thickness of the intermediate layer on the single side of the negative electrode sheet is 5 µm, and a thickness ratio of the silicon-containing layer to the carbon layer is 4:1.

In this embodiment, a positive active material is lithium nickel manganese cobalt. The lithium-ion battery is a pouch battery which is made of a positive electrode sheet, a separator, and a negative electrode sheet stacked in sequence in a Z-shape.

### Embodiment 2

Based on a weight ratio of 60:17:3:10, a silicon material (silicon oxide, SiOₓ, where x=1), graphite (artificial graphite), a conductive agent (where a weight ratio of a single-wall carbon nanotube to conductive carbon black is 1:2), and a binder (polyacrylic acid) are dispersed in deionized water, to prepare a slurry A and sieve the slurry A for standby. Based on a weight ratio of 30:55:15, a conductive agent (single-wall carbon nanotube), a binder (where a weight ratio of polyacrylic acid to a styrene-butadiene rubber is 40:15), and a dispersant (sodium carboxymethylcellulose) are dispersed in deionized water, to prepare a slurry B and sieve the slurry B for standby. Based on a weight ratio of 96:1:1.5:1.5, a carbon material (artificial graphite), a conductive agent (conductive carbon black), a binder (a styrene-butadiene rubber), and a dispersant (lithium carboxymethylcellulose) are dispersed in deionized water, to prepare a slurry C and sieve the slurry C for standby. The slurry A, the slurry B, and the slurry C are coated sequentially and evenly on a copper foil current collector to obtain a silicon-containing bottom layer, an intermediate layer, and a graphite top layer, and then are coated on two sides. Then, drying, winding, rolling, and die-cutting are performed to obtain a negative electrode sheet. A total thickness of a single side excluding the current collector (a total thickness of the silicon-containing layer, the intermediate layer, and the carbon layer) is 60 µm. A thickness of the intermediate layer on the single side of the negative electrode sheet is 5 µm, and a thickness ratio of the silicon-containing layer to the carbon layer is 4:1.

In this embodiment, a positive active material is lithium nickel manganese cobalt. The lithium-ion battery is a pouch battery which is made of a positive electrode sheet, a separator, and a negative electrode sheet stacked in sequence in a Z-shape.

### Embodiment 3

A lithium-ion battery is prepared based on the method in Embodiment 1 with a difference that the thickness of the intermediate layer on the single side of the coated negative electrode sheet is 1 µm.

### Embodiment 4

A lithium-ion battery is prepared based on the method in Embodiment 1 with a difference that the weight ratio of the polyacrylic acid to the styrene-butadiene rubber is 2:20 during preparation of the slurry B.

### Embodiment 5

A lithium-ion battery is prepared based on the method in Embodiment 1 with a difference that the weight ratio of the polyacrylic acid to the styrene-butadiene rubber is 10:1 during preparation of the slurry B.

### Embodiment 6

A lithium-ion battery is prepared based on the method in Embodiment 1 with a difference that the weight ratio of the polyacrylic acid to the styrene-butadiene rubber is 40:1 during preparation of the slurry B.

### Embodiment 7

A lithium-ion battery is prepared based on the method in Embodiment 1 with a difference that the thickness of the intermediate layer on the single side of the negative electrode sheet is 25 µm.

### Embodiment 8

A lithium-ion battery is prepared based on the method in Embodiment 1 with a difference that a composition of raw materials in the slurry B are different. Specifically, based on a weight ratio of 0.05:75:20, a conductive agent (single-wall carbon nanotube), a binder (where a weight ratio of polyacrylic acid to a styrene-butadiene rubber is 60:15), and a dispersant (lithium carboxymethylcellulose) are dispersed in deionized water, to prepare the slurry B.

### Embodiment 9

A lithium-ion battery is prepared based on the method in Embodiment 1 with a difference that artificial graphite is added to the slurry B. Specifically, based on a weight ratio of 5:11:69:15, the artificial graphite, a conductive agent (single-wall carbon nanotube), a binder (where a weight ratio of polyacrylic acid to a styrene-butadiene rubber is 60:15), and a dispersant (lithium carboxymethylcellulose) are dispersed in deionized water, to prepare the slurry B.

### Embodiment 10

A lithium-ion battery is prepared based on the method in Embodiment 1 with a difference that an elemental silicon material is used instead of the silicon oxide (SiOₓ, where x=1) with a same weight during preparation of the slurry A.

### Embodiment 11

A lithium-ion battery is prepared based on Embodiment 1 with a difference that hard carbon is used instead of the artificial graphite with a same weight during preparation of the slurry A.

### Embodiment 12

A lithium-ion battery is prepared based on the method in Embodiment 1 with a difference that hard carbon is used instead of the artificial graphite with a same weight during preparation of the slurry C.

### Embodiment 13

A lithium-ion battery is prepared based on the method in Embodiment 1 with a difference that the weight ratio of the single-wall carbon nanotube to the conductive carbon black is 1:20 during preparation of the slurry A.

### Embodiment 14

A lithium-ion battery is prepared based on the method in Embodiment 1 with a difference that a styrene-butadiene rubber is used instead of the polyacrylic acid with a same weight during preparation of the slurry A.

### Comparative example 1

A lithium-ion battery is prepared based on the method in Embodiment 1 with a difference that, during preparation of the negative electrode sheet, slurries are prepared based on a formula of the slurry A and the slurry C in Embodiment 1, and the slurry A and the slurry C are mixed to obtain a mixed slurry for coating instead of layered coating.

### Comparative example 2

A lithium-ion battery is prepared based on the method in Embodiment 1 with a difference that, during preparation of the negative electrode sheet, the slurry B is not coated, in other words, the negative electrode sheet did not include the intermediate layer.

### Test example 1: Normal-temperature fast-charging cycle test

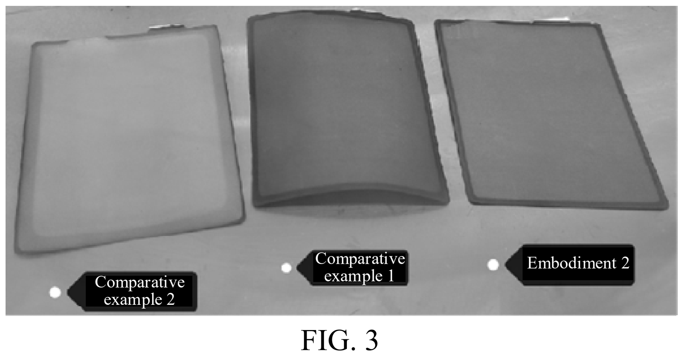

Test method: An assembled pouch battery is placed in a test cabinet of LAND Electronic Co., Ltd to perform charging and discharging testing. A charging process is step charging, including: 1. charging to 3.8 V at a rate of 3 C; 2. charging to 4.0 V at a rate of 2 C; 3. charging to 4.1 V at a rate of 1 C; and 4. charging to 4.2 V at a rate of 0.5 C. A discharging process is discharging to 2.75 V at a rate of 1 C. Results of discharge capacity retention rates after 300 cycles of normal-temperature fast-charging of the embodiments and the comparative examples are shown in Table 1. Normal-temperature fast-charging cycle performance of Embodiment 1 to Embodiment 3 and Comparative example 2 is shown in FIG. 2. A lithium precipitation condition of a negative electrode sheet of Embodiment 2 and Comparative example 1 to Comparative example 2 when a state of charge (SOC) of a disassembled battery after 100 cycles of normal-temperature fast-charging is 100% is shown in FIG. 3.

### Test example 2: Normal-temperature direct current internal resistance (DCIR) test

Test method: An assembled pouch battery is placed in a test cabinet of LAND Electronic Co., Ltd, a state of charge (SOC) of the battery is adjusted to 50%, and after the battery is left for 2h, the battery is discharged at a rate of 1.5 C for 30s. A DCIR value may be obtained by subtracting a termination voltage during a rest period before discharging from a discharge termination voltage and dividing a result by a discharge current. For test results, refer to Table 1.

**Table 1**

| Number | DCIR (mΩ) | Discharge capacity retention rate (%) after 300 cycles |
|---|---|---|
| Embodiment 1 | 44.37 | 95.6 |
| Embodiment 2 | 43.69 | 94.7 |
| Embodiment 3 | 43.25 | 94.1 |
| Embodiment 4 | 47.20 | 92.3 |
| Embodiment 5 | 44.20 | 93.9 |
| Embodiment 6 | 46.60 | 92.1 |
| Embodiment 7 | 53.69 | 74.8 |
| Embodiment 8 | 57.32 | 78.2 |
| Embodiment 9 | 43.25 | 97.2 |
| Embodiment 10 | 44.53 | 84.2 |
| Embodiment 11 | 44.87 | 86.3 |
| Embodiment 12 | 44.58 | 90.4 |
| Embodiment 13 | 45.54 | 92.2 |
| Embodiment 14 | 54.32 | 78.3 |
| Comparative example 1 | 59.27 | 52.3 |
| Comparative example 2 | 56.25 | Lower than 50 |

It will be understood from the results in Table 1 that DCIR values in Embodiment 1 to Embodiment 3 are low. The discharge capacity retention rate after 300 cycles of normal-temperature fast-charging is above 94%. A silicon-containing negative electrode sheet in Comparative example 1 does not use a layered arrangement. In comparison with Embodiment 1, a DCIR value is significantly increased, and the discharge capacity retention rate after 300 cycles of normal-temperature fast-charging is about 50%. As shown in FIG. 2, a silicon-containing negative electrode sheet in Comparative example 2 uses a layered arrangement, but no intermediate layer is arranged between a silicon-containing layer and a carbon layer. Performance of a battery begins to decrease after more than 100 cycles of normal-temperature fast-charging. The discharge capacity retention rate after 300 cycles is less than 50%, and the cycle life is lower than that of Embodiment 1 to Embodiment 3, indicating that the layered arrangement and introduction of the intermediate layer between the silicon-containing layer and the carbon layer can effectively prolong the cycle life of a composite negative electrode of a carbon layer and a silicon layer.

In addition, it will be understood from Embodiment 1 and Embodiment 2, and Embodiment 4 to Embodiment 6 that a component and a content of a binder in the intermediate layer affect battery cycle performance. An appropriate composition and content of the binder can increase adhesiveness between the carbon layer and the silicon layer, to increase the cycle life of the battery.

It will be understood from Embodiment 1, Embodiment 3, and Embodiment 7 that a thickness of the intermediate layer also affects the adhesiveness between the carbon layer and the silicon layer. If the intermediate layer is too thick, the ion diffusion distance increases, and the interface internal resistance increases. As a result, the DCIR value of the intermediate layer increases, and the battery cycle performance decreases. If the intermediate layer is too thin, the adhesiveness is poor. It will be understood that an appropriate thickness range is beneficial for increasing the cycle life of the battery.

In comparison with Embodiment 1, the conductive agent in the intermediate layer in Embodiment 8 is reduced, as a result, a DCIR value of the intermediate layer increases, indicating that an intermediate layer with low conductivity can no longer form a good electronic circuit between two layers, and there is an adverse impact on battery impedance and cycle performance, to further reduce the cycle life.

In Embodiment 9, the artificial graphite is further added to the intermediate layer based on Embodiment 1, the DCIR value is reduced, the discharge capacity retention rate after the cycles is improved, and battery performance is improved.

In Embodiment 10, the elemental silicon material is used instead of the silicon oxide (SiOₓ, where x=1) with the same weight during the preparation of the slurry A. In comparison with Embodiment 1, the discharge capacity retention rate decreases, indicating that a silicon oxide material can provide better cycle performance than silicon.

In Embodiment 11 and Embodiment 12, hard carbon is used instead of the graphite in the silicon-containing layer and the carbon layer, respectively. The discharge capacity retention rate after 300 cycles is significantly lower than that of Embodiment 1.

In Embodiment 13, a content of the single-wall carbon nanotube in the conductive agent of the silicon-containing layer is reduced compared with that in Embodiment 1, so that the DCIR value correspondingly increases, indicating that an appropriate proportion of the single-wall carbon nanotube can effectively reduce battery impedance, and further increase cycle life.

The binder of the silicon layer in Embodiment 14 entirely includes the styrene-butadiene rubber. In comparison with Embodiment 1 in which the binder is the polyacrylic acid, because a bonding force of the styrene-butadiene rubber is weaker than that of the polyacrylic acid, it cannot withstand the expansion and contraction process of the silicon-containing top layer during charging and discharging, resulting in a decrease in battery capacity.

It will be understood from FIG. 2 that, in Comparative example 2, the intermediate layer is not included, and capacity decreases rapidly during a fast-charging cycle. However, in Embodiment 1 to Embodiment 3, a high-capacity retention rate is maintained. Introduction of the intermediate layer effectively improves interface compatibility between the silicon-containing layer and the carbon layer, to improve the battery performance under the fast-charging cycle.

It will be understood from FIG. 3 that, in Comparative example 2, the intermediate layer is not included, and obvious lithium precipitation occurs during the fast-charging cycle (that is, a white lithium metal is precipitated on a surface of the negative electrode sheet). However, in Embodiment 2, no obvious lithium precipitation occurs on the interface of the negative electrode sheet after the cycling, indicating that the introduction of the intermediate layer improves the carrier transmission channels at interfaces between the two layers.

It will be understood that, in the present disclosure, appropriate types and proportions of the conductive agent and binder in the intermediate layer are selected, a first carbon material is introduced into the intermediate layer, and compositions and proportions of the silicon-containing layer and the carbon layer are properly selected, so that the cycle life of the lithium-ion battery is further improved.

The foregoing embodiments merely show several implementations of the present disclosure. The descriptions thereof are relatively specific and detailed, but shall not be understood as limitations to the scope of the present disclosure. It should be noted that, for a person of ordinary skill in the art, several transformations and improvements can be made without departing from the idea of the present disclosure. These transformations and improvements belong to the scope of protection of the present disclosure. Therefore, the protection scope of the patent of the present disclosure shall be subject to the appended claims.

## Claims

1. A negative electrode sheet, comprising a current collector (1), and a silicon-containing layer (2), an intermediate layer (3), and a carbon layer (4) that are stacked in sequence on at least one side of the current collector (1), wherein the intermediate layer (3) comprises a first conductive agent and a first binder.

2. The negative electrode sheet according to claim 1, wherein the silicon-containing layer (2) comprises a silicon material, a second carbon material, a second conductive agent, and a second binder.

3. The negative electrode sheet according to claim 2, wherein the second carbon material comprises at least one of natural graphite, artificial graphite, hard carbon, soft carbon, or a mesocarbon microbead; or
the second conductive agent comprises at least one of a single-wall carbon nanotube, conductive graphite, conductive carbon black, graphene, or an arrayed carbon fiber.

4. The negative electrode sheet according to claim 2 or 3, wherein based on a total weight of the silicon-containing layer (2), in the silicon-containing layer (2), a total content of the silicon material and the second carbon material ranges from 70 wt.% to 97 wt.%, a content of the second conductive agent ranges from 0.1 wt.% to 15 wt.%, and a content of the second binder ranges from 3 wt.% to 15 wt.%.

5. The negative electrode sheet according to any one of claims 1 to 4, wherein the carbon layer (4) comprises a third carbon material, a third conductive agent, and a third binder.

6. The negative electrode sheet according to claim 5, wherein the third carbon material comprises at least one of natural graphite, artificial graphite, hard carbon, soft carbon, or a mesocarbon microbead; or
the third conductive agent comprises at least one of a single-wall carbon nanotube, conductive graphite, conductive carbon black, graphene, or an arrayed carbon fiber.

7. The negative electrode sheet according to claim 5 or 6, wherein based on a total weight of the carbon layer (4), in the carbon layer (4), a content of the third carbon material ranges from 70 wt.% to 97 wt.%, a content of the third conductive agent ranges from 0.1 wt.% to 15 wt.%, and a content of the third binder ranges from 1 wt.% to 15 wt.%.

8. The negative electrode sheet according to any one of claims 1 to 7, wherein the first conductive agent comprises at least one of a single-wall carbon nanotube, conductive graphite, conductive carbon black, graphene, or an arrayed carbon fiber.

9. The negative electrode sheet according to any one of claims 1 to 8, wherein the first binder comprises polyacrylic acid and/or a styrene-butadiene rubber.

10. The negative electrode sheet according to any one of claims 1 to 9, wherein the first binder comprises a mixture of the polyacrylic acid and the styrene-butadiene rubber, wherein a weight ratio of the polyacrylic acid to the styrene-butadiene rubber is (0.1 - 40):1; or a weight ratio of the polyacrylic acid to the styrene-butadiene rubber is (2 - 10):1.

11. The negative electrode sheet according to any one of claims 1 to 10, wherein based on a total weight of the intermediate layer (3), in the intermediate layer (3), a content of the first conductive agent is 10 wt.% to 70 wt.%, and a content of the first binder is 30 wt.% to 90 wt.%.

12. The negative electrode sheet according to any one of claims 1 to 11, wherein the intermediate layer (3) further comprises a first carbon material.

13. The negative electrode sheet according to claim 12, wherein based on the total weight of the intermediate layer (3), a content of the first carbon material is 5 wt.% to 20 wt.%

14. The negative electrode sheet according to any one of claims 1 to 13, wherein based on a single-side thickness, a total thickness of the silicon-containing layer (2), the intermediate layer (3), and the carbon layer (4) is 40 µm to 100 µm.

15. The negative electrode sheet according to any one of claims 1 to 14, wherein a thickness ratio of the silicon-containing layer (2) to the carbon layer (4) is (1 - 5):1.

16. The negative electrode sheet according to any one of claims 1 to 15, wherein based on a single-side thickness, a thickness of the intermediate layer (3) is 1 µm to 20 µm.

17. A preparation method for a negative electrode sheet, comprising: sequentially forming a silicon-containing layer (2), an intermediate layer (3), and a carbon layer (4) on at least one side of a current collector (1), wherein the intermediate layer (3) comprises a first conductive agent and a first binder.

18. The method according to claim 17, comprising:
(1) mixing a silicon material, a second carbon material, a second conductive agent, and a second binder in proportion, to prepare a slurry A;
(2) mixing a first conductive agent and a first binder in proportion, to prepare a slurry B;
(3) mixing a third carbon material, a third conductive agent, and a third binder in proportion, to prepare a slurry C; and
(4) sequentially coating the slurry A, the slurry B, and the slurry C to the current collector, to obtain the negative electrode sheet.

19. A lithium-ion battery, comprising the negative electrode sheet according to any one of claims 1 to 16 or the negative electrode sheet prepared by using the method according to claim 17 or 18.

20. An electric vehicle, comprising the lithium-ion battery according to claim 19.
